# EUROPÄISCHE PATENTSCHRIFT

(11) **EP 0 687 543 B1**
(45) Veröffentlichungstag und Bekanntmachung des Hinweises auf die Patenterteilung: **11.10.2000**
(21) Anmeldenummer: 95108689.1
(22) Anmeldetag: 07.06.1995
(51) Int. Cl.: B29C 45/18, B29C 47/10

(54) **Vorrichtung zum Beschicken von Spritzgiess- und Extrudereinheiten**
Feeding device for injection moulding and extrusion moulding units
Dispositif pour alumenter des unités de moulage par injection et par extrusion

(30) Priorität: 16.06.1994 DE 4421117
(43) Veröffentlichungstag der Anmeldung: 20.12.1995
(73) Patentinhaber: Krauss-Maffei Kunststofftechnik GmbH, 80997 München (DE)
(72) Erfinder: Brams, Peter, D-80935 München (DE); Ell, Franz, D-85247 Schwabhausen (DE); Mandl, Werner, D-85250 Unterzeitlbach (DE)
(74) Vertreter: Rucker, Bernd, Dipl.-Ing.

(56) Entgegenhaltungen:
- EP-A- 0 286 972
- DD-A- 227 648
- DE-A- 1 607 780
- DE-A- 2 218 353
- DE-C- 3 905 535
- US-A- 3 248 019
- US-A- 3 559 240
- US-A- 4 581 992
- PATENT ABSTRACTS OF JAPAN vol. 018, no. 335 (M-1627), 24.Juni 1994 & JP 06 079754 A (NISSEI PLASTICS IND CO), 22.März 1994,

## Beschreibung

Die Erfindung bezieht sich auf eine Vorrichtung zum Beschicken von Spritzgieß- und Extrudereinheiten gemäß dem Oberbegriff des Patentanspruchs 1.

Die Mantelinnenfläche des Einfülltrichters ist dabei relativ glatt, insbesondere, wenn sie zur Verschleißminderung z.B. verchromt ist. Vor allem bei längerem Produktionseinsatz derartiger Vorrichtungen wird die Mantelinnenfläche durch Materialabrieb, insbesondere bei der Verarbeitung von Recyclaten, Füllstoffen, Glasfasern, Keramik und dergleichen Stoffe zusätzlich geglättet bzw. poliert, so daß sie auch die ursprünglich noch vorhandene Oberflächenrauhigkeit verliert. Dies kann dazu führen, daß das eingebrachte Material durchrutscht und von der Förderschnecke nicht mehr oder zumindest nicht kontinuierlich weiterbefördert wird, so daß die Förderleistung beeinträchtigt ist.

Es wurde bereits versucht, mit verschiedenen Einzugshilfen wie z.B. mit gezahnten Förderschnecken hier Abhilfe zu schaffen, jedoch nur mit geringem Erfolg.

Der Erfindung liegt daher die Aufgabe zugrunde, die Förderleistung bei eingangs genannten Vorrichtungen zu erhöhen und die Kontinuität der Förderung des in den Einfülltrichter eingebrachten Materials zu gewährleisten.

Diese Aufgabe wird gemäß den Merkmalen des Patentanspruchs 1 gelöst.

Die Erfindung ermöglicht, mit einer Vorrichtung gemäß dem Oberbegriff des Patentanspruchs 1 erstmals SMC und stark eingedickte Massen verarbeiten zu können. Die Einzugsleistung bei BMC-Massen kann verdoppelt, d.h. die Ladezeit um die Hälfte verkürzt werden. Thermoplastische Altmaterialien bzw. Recyclingmassen können nun auch problemlos und mit großer Sicherheit eingezogen werden. Auch für die Verarbeitung von Duroplasten wie Phenolharze und Gummiabfällen wie z.B. Altreifen hat die Erfindung Möglichkeiten geschaffen.

Weitere vorteilhafte Ausbildungen der Erfindung ergeben sich aus den weiteren Ansprüchen.

Ein Ausführungsbeispiel der Erfindung ist in der Zeichnung dargestellt. Es zeigen:
- Fig. 1: eine Spritzgießeinheit mit einem Einfülltrichter und einer Förderschnecke,
- Fig. 2: Einfülltrichter und Förderschnecke in einer Ausschnittvergrößerung

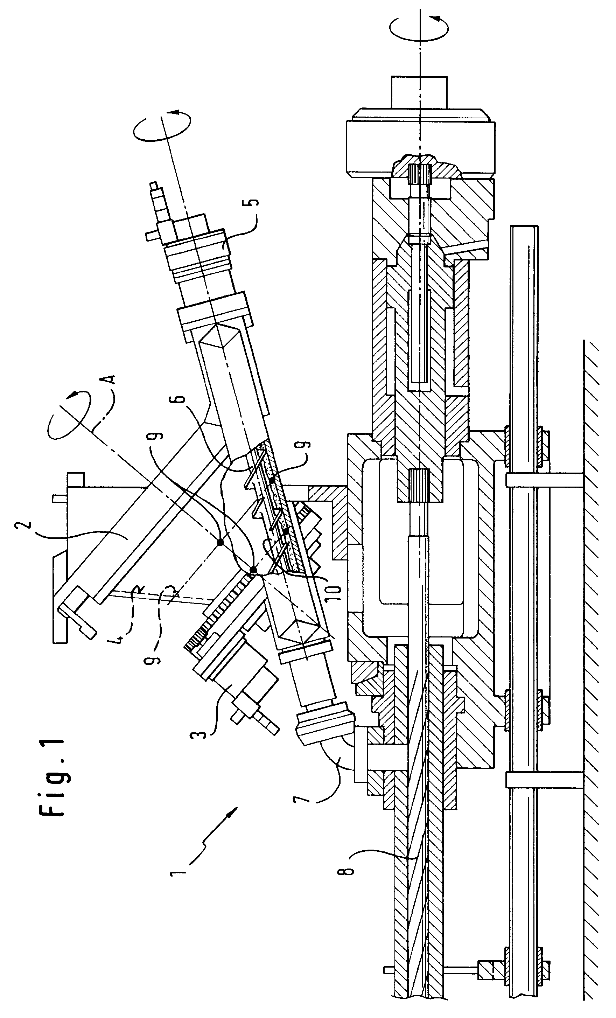

Gemäß Fig. 1 ist im oberen Teil einer Extrudereinheit 1 ein Einfülltrichter 2 mittels eines Antriebes 3 rotierbar um eine Achse A angeordnet. Entlang der Mantelinnenfläche 4 des Einfülltrichters 2 ist eine mittels eines Antriebsmotors 5 antreibbare Förderschnecke 6 durch den Einfülltrichter 2 hindurchgeführt. Die Förderschnecke 6 fördert das eingebrachte Material über einen Rohranschluß 7 in eine Dosierschnecke 8 der Extrudereinheit 1. Die Mantelinnenfläche 4 ist mit zwei Reihen von Stiften 9 versehen, die in den Innenraum des Einfülltrichters 2 hineinragen. Die Förderschnecke 6 ist mit Aussparungen 10 versehen.

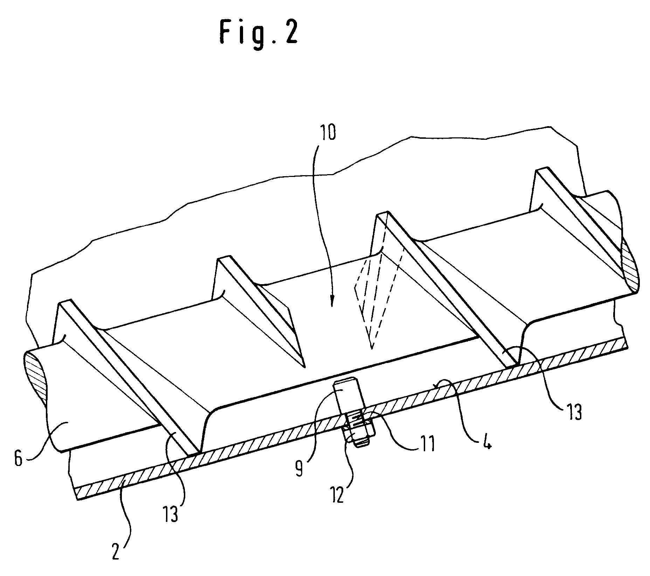

Gemäß Fig. 2 ist ein höhenverstellbarer Stift 9 mit einem Gewinde 11 und einer Mutter 12 am Einfülltrichter 2 befestigt dargestellt. Die Stege 13 der Förderschnecke 6 sind für den freien Durchgang der Stifte 9 mit Aussparungen 10 versehen.

## Patentansprüche

1. Vorrichtung zum Beschicken von Spritzgieß- und Extrudereinheiten mit einer Dosierschnecke, z.B. bei Extrudern, oder einem Kolbenvorraum, z.B. bei Kolben-Spritzgießmaschinen, mit zähfließenden Materialien, insbesondere glasfaserbeladenen Kunststoffen, wie z.B. Polyester und Polypropylen, mit einem Einfülltrichter und einer Förderschnecke, wobei der Einfülltrichter als Rotationskörper mit einem um eine Rotationsachse drehbaren Mantel ausgerüstet und die Förderschnecke durch den Rotationskörper entlang der Mantelinnenfläche hindurchgeführt ist, **dadurch gekennzeichnet,** daß die Mantelinnenfläche (4) des Einfülltrichters (2) im Bereich der Gänge der Förderschnecke (6) mit Erhöhungen und/oder Vertiefungen versehen ist und die Förderschnecke (6) für den freien Durchgang der Erhöhungen ausgespart ist.

2. Vorrichtung nach Anspruch 1, **dadurch gekennzeichnet,** daß die Erhöhungen Stifte (9) sind und die Stege (13) der Förderschnecke (6) für den freien Durchgang der Stifte (9) ausgespart sind.

3. Vorrichtung nach Anspruch 2, **dadurch gekennzeichnet,** daß die Stifte (9) in einer oder mehreren senkrecht zur Achse (A) des Einfülltrichters (2) verlaufenden Reihen angeordnet sind.

4. Vorrichtung nach den Ansprüchen 2 und 3, **dadurch gekennzeichnet,** daß die Stifte (9) höhenverstellbar angeordnet sind.

5. Vorrichtung nach Anspruch 1, **dadurch gekennzeichnet,** daß die Vertiefungen als Nuten oder Taschen ausgebildet sind.

## Claims

1. Device for feeding injection moulding and extrusion units with a metering screw, for example in the case of extruders, or a plunger entry space, for example in plunger injection moulding machines, with viscous materials, in particular fibreglass-containing plastics materials, such as, for example, polyester and polypropylene, with a feed hopper and a screw conveyor, wherein the feed hopper as rotational body is equipped with a casing which can be rotated around an axis of rotation and the screw conveyor is guided through the rotational body along the internal surface of the casing, characterised in that the internal surface of the casing (4) of the feed hopper (2) is provided with elevations and/or depressions in the region of the flights of the screw conveyor (6) and the screw conveyor (6) is recessed for the free passage of the elevations.

2. Device according to claim 1, characterised in that the elevations are pins (9) and the webs (13) of the screw conveyors (6) are recessed for the free passage of the pins (9).

3. Device according to claim 2, characterised in that the pins (9) are arranged in one or more rows running perpendicular to the axis (A) of the feed hopper (2).

4. Device according to claims 2 and 3, characterised in that the pins (9) are adjustable in height.

5. Device according to claim 1, characterised in that the depressions are designed as grooves or pockets.

## Revendications

1. Dispositif pour alimenter des unités de moulage par injection et par extrusion, comprenant une vis sans fin de dosage, par exemple dans les extrudeuses, ou une préchambre de piston, par exemple dans les machines de moulage par injection à piston, en matériaux visqueux, en particulier des matières plastiques chargées de fibres de verre, tels que les polyesters et le polypropylène, avec un entonnoir de remplissage et une transporteuse à vis sans fin, ledit entonnoir étant formé en corps de révolution comprenant une enveloppe susceptible de tourner autour d'un axe de révolution et ladite transporteuse à vis sans fin passant par ledit corps de révolution le long de la surface intérieure de l'enveloppe, **caractérisé en ce que**, au niveau des pas de ladite transporteuse à vis sans fin (6), ladite surface intérieure de l'enveloppe (4) dudit entonnoir (2) est munie de bosses et/ou de creux et que ladite transporteuse à vis sans fin (6) possède des évidements pour le libre passage desdites bosses.

2. Dispositif selon la revendication 1, caractérisé en ce que lesdites bosses sont des chevilles (9) et que les nervures (13) de ladite transporteuse à vis sans fin (6) possèdent des évidements pour le libre passage desdites chevilles (9).

3. Dispositif selon la revendication 2, caractérisé en ce que lesdites chevilles (9) sont diposées dans une ou plusieurs rangées perpendiculaires à l'axe (A) dudit entonnoir de remplissage (2).

4. Dispositif selon les revendications 2 et 3, caractérisé en ce que lesdites chevilles (9) sont disposées d'une manière réglable en hauteur.

5. Dispositif selon la revendication 1, caractérisé en ce que lesdits creux se présentent sous la forme d'encoches ou d'évidements.
